# EUROPÄISCHE PATENTANMELDUNG

(11) **EP 4 095 414 A1**
(43) Veröffentlichungstag der Anmeldung: **30.11.2022**
(21) Anmeldenummer: 22175372.6
(22) Anmeldetag: 25.05.2022
(51) Int. Cl.: F16H 25/02, F16H 25/16, F16H 25/20, E02B 7/40, F16H 25/18

(54) **VERSTELLVORRICHTUNG**

(30) Priorität: 25.05.2021 DE 102021113408
(71) Anmelder: Framo Morat GmbH & Co. KG, 79871 Eisenbach (DE)
(72) Erfinder: Kuster, Holger, 79199 Kirchzarten (DE)
(74) Vertreter: Geitz Truckenmüller Lucht Christ

(57) **Zusammenfassung**

Es wird eine Verstellvorrichtung vorgeschlagen mit einem Antrieb (2, 42, 52), mit einer durch den Antrieb (2, 42, 52) angetriebenen ersten Dreheinrichtung (3), mit einer durch den Antrieb (2, 42, 52) angetriebenen zweiten Dreheinrichtung (4), wobei die erste Dreheinrichtung (3) und die zweite Dreheinrichtung (4) jeweils einen Drallkörper (9, 12), der in Wirkverbindung mit dem Antrieb (2, 42, 52) steht und von diesem entlang einer geometrischen linearen Achse angetrieben ist, eine erste Hülse (7, 10) und eine zweite Hülse (8, 11), welche gegenüber der ersten Hülse (7, 10) um eine geometrische Hülsenachse (13) drehbar ist, aufweisen, wobei der Drallkörper (9, 12) einen ersten Drallkörperabschnitt (22) aufweist, der in Eingriff mit der ersten Hülse steht (7, 10) und einen zweiten Drallkörperabschnitt (23), der mit der zweiten Hülse (8, 11) in Eingriff steht, derart, dass die erste und zweite Dreheinrichtung (3, 4) eine Antriebskraft des Antriebs (2, 42, 52) in eine Drehung der zweiten Hülse (8, 11) relativ zu der ersten Hülse (7, 10) um die Hülsenachse (13) umwandeln.

## Beschreibung

Die Erfindung geht aus von einer Verstellvorrichtung mit einem Antrieb und einer von dem Antrieb angetriebenen Dreheinrichtung.

Verstellvorrichtungen dienen dazu, mechanische Bauteile zu bewegen. Hierzu zählt beispielsweise die Bewegung eines Bauteils von einer Schließstellung in eine Öffnungsstellung oder umgekehrt oder die Ausrichtung eines Bauteils relativ zu einem anderen Bauteil. Zu derartigen Bauteilen gehören beispielsweise Deckel, Klappen, Platten, Tore, Türen, Stützen oder Bügel. Verstellvorrichtungen weisen einen Antrieb und eine Dreheinrichtung auf, welche sowohl an den Antrieb als auch an das zu bewegende Bauteil gekoppelt ist. Die Dreheinrichtung sorgt dafür, dass das Bauteil mit Hilfe der durch den Antrieb erzeugten Antriebskraft gedreht oder geschwenkt wird. Hat das Bauteil ein hohes Eigengewicht oder wirken auf das Bauteil große äußere Kräfte, so müssen eine entsprechend große Antriebskraft oder ein großes Drehmoment erzeugt werden, um das Bauteil zu bewegen. Eine derartige äußere Kraft kann beispielsweise durch den Wasserdruck erzeugt werden, wenn das Bauteil zum Öffnen und Schließen von Klappen unter Wasser eingesetzt wird. Ferner müssen der Antrieb und die Dreheinrichtung so ausgelegt sein, dass sie der Belastung durch das Eigengewicht des Bauteils oder den äußeren Kräften standhalten. Bei bestimmten Anwendungen steht darüber hinaus für die Verstellvorrichtung wenig Platz zur Verfügung

Der Erfindung liegt die Aufgabe zugrunde, eine Verstellvorrichtung zur Verfügung zu stellen, welche in der Lage ist, große Kräfte und große Drehmomente zu übertragen, um die Position oder die Ausrichtung von Bauteilen mit großem Eigengewicht oder von Bauteilen, auf die größere äußere Kräfte wirken, zu verstellen, ohne dabei viel Platz zu beanspruchen.

Diese Aufgabe wird durch eine Verstellvorrichtung mit den Merkmalen des Anspruchs 1 gelöst. Die Verstellvorrichtung zeichnet sich dadurch aus, dass sie mit einer ersten und einer zweiten Dreheinrichtung ausgestattet ist, die beide durch einen gemeinsamen Antrieb angetrieben sind. Dadurch ist gewährleistet, dass die erste und zweite Dreheinrichtung synchronisiert sind. Das zu bewegende Bauteil wird mit der ersten und mit der zweiten Dreheinrichtung verbunden, so dass die von dem Antrieb erzeugte Antriebskraft an zwei Positionen auf das Bauteil übertragen wird.

Sowohl die erste Dreheinrichtung als auch die zweite Dreheinrichtung weisen jeweils einen Drallkörper, eine erste Hülse und eine zweite Hülse auf. Dabei ist die zweite Hülse relativ zu der ersten Hülse um eine geometrische Hülsenachse drehbar angeordnet. Der Drallkörper steht in Wirkverbindung mit dem Antrieb und wird von diesem entlang einer geometrischen linearen Achse bewegt. Dabei weist der Drallkörper einen ersten Drallkörperabschnitt auf, der in Eingriff mit der ersten Hülse steht, und einen zweiten Drallkörperabschnitt, der mit der zweiten Hülse in Eingriff steht. Wenn der Drallkörper durch den Antrieb entlang der geometrischen linearen Achse bewegt wird, verlagert sich der Drallkörper relativ zu der ersten und zweiten Hülse. Er stützt sich dabei an der ersten Hülse ab und sorgt für eine Drehung der zweiten Hülse relativ zu der ersten Hülse. Die Antriebskraft des Antriebs wird auf diese Weise in eine Drehung der zweiten Hülse relativ zu der ersten Hülse um die Hülsenachse umgewandelt.

Die geometrische lineare Achse der ersten Dreheinrichtung stimmt mit der geometrischen linearen Achse der zweiten Dreheinrichtung überein oder ist zu dieser parallel. Als Antrieb eignet sich ein Linearantrieb, beispielsweise ein Hydraulikzylinder, oder ein Rotationsantrieb, dessen Drehbewegung in eine lineare Bewegung umgesetzt wird.

Ein erstes Bauteil, welches gegenüber einem zweiten Bauteil mittels der Verstelleinrichtung bewegt werden soll, kann derart angeordnet sein, dass die zweite Hülse der ersten Dreheinrichtung und die zweite Hülse der zweiten Dreheinrichtung mit dem ersten Bauteil verbunden sind, während die erste Hülse der ersten Dreheinrichtung und die erste Hülse der zweiten Dreheinrichtung mit dem zweiten Bauteil verbunden sind. Hierzu können die ersten und zweiten Hülsen mit Befestigungsteilen ausgestattet sein, die eine Verbindung zwischen dem ersten Bauteil und den zweiten Hülsen sowie eine Verbindung zwischen dem zweiten Bauteil und den ersten Hülsen ermöglichen.

Wenn an der ersten und zweiten Dreheinrichtung ein zu bewegendes Bauteil angeordnet ist, wirkt die Gewichtskraft dieses Bauteils oder je nach Einsatzgebiet der Verstelleinrichtung eine andere Kraft auf die beiden Dreheinrichtungen und wird von diesen auf den Antrieb übertragen. Wird die Verstelleinrichtung beispielsweise bei einem Stauwehr eingesetzt, so wird eine Kraft, welche auf das an der ersten und zweiten Dreheinrichtung angeordnete Bauteil wirkt, durch den Staudruck erzeugt. Die erste Dreheinrichtung stützt sich auf dem Antrieb ab und übt auf den Antrieb entlang der geometrischen linearen Achse der ersten Dreheinrichtung eine erste axiale Kraft aus. Die zweite Dreheinrichtung stützt sich ebenfalls auf dem Antrieb ab und übt auf den Antrieb entlang der geometrischen linearen Achse der zweiten Dreheinrichtung eine zweite axiale Kraft aus. Dies erfolgt derart, dass die Gewichtskraft des an der Verstellvorrichtung angeordneten Bauteils oder äußere Kräfte, welche auf das Bauteil wirken, auf die zweite Hülse der beiden Dreheinrichtungen und von dort auf den Drallkörper der ersten Dreheinrichtung und auf den Drallkörper der zweiten Dreheinrichtung übertragen werden. Von dort werden diese Kräfte auf die erste Hülse der ersten Dreheinrichtung und auf die erste Hülse der zweiten Dreheinrichtung übertragen. Die ersten Hülsen der ersten und zweiten Dreheinrichtung leiten diese Kräfte in Form einer ersten axialen Kraft und einer zweiten axialen Kraft in den Antrieb ein. Die erste und die zweite Dreheinrichtung sind dabei derart ausgestaltet, dass die erste axiale Kraft und die zweite axiale Kraft gleich groß und entgegengesetzt gerichtet sind und sich gegenseitig aufheben. Da das zu bewegende Bauteil sowohl mit der ersten Dreheinrichtung als auch mit der zweiten Dreheinrichtung verbunden ist, wird davon ausgegangen, dass die Kraft, die das Bauteil auf die erste Dreheinrichtung ausübt, den gleichen Betrag aufweist, wie die Kraft, die das Bauteil auf die zweite Dreheinrichtung ausübt. Die Summe der ersten axialen Kraft und der zweiten axialen Kraft ergibt Null. Die erste axiale Kraft und die zweite axiale Kraft, die beim Bewegen der Drallkörper auftreten, müssen nicht allein an den ersten Hülsen abgestützt werden. Sie stützen sich über den gemeinsamen Antrieb gegenseitig ab, vorzugsweise in Form einer Zugbelastung. Die Verstellvorrichtung weist damit auch bei zu bewegenden Bauteilen mit hohem Eigengewicht oder hohen äußeren Kräften eine hohe Stabilität und Robustheit auf.

Der Drallkörper der ersten Dreheinrichtung und der Drallkörper der zweiten Dreheinrichtung werden durch den gemeinsamen Antrieb entlang einer übereinstimmenden geometrischen linearen Achse oder entlang von zwei parallelen geometrischen linearen Achsen bewegt. Dabei werden die Drallkörper durch den Antrieb entweder aufeinander zu oder voneinander weg bewegt. Der Antrieb sorgt dafür, dass sich der Abstand zwischen den beiden Drallkörpern vergrößert oder verkleinert.

Da sich das Lastmoment auf die erste und zweite Dreheinrichtung aufteilt, kann ein deutlich höheres Drehmoment übertragen werden, als wenn nur eine Dreheinrichtung verwendet wird oder die beiden Dreheinrichtungen können entsprechend kleiner ausgeführt werden. Da die Verstellvorrichtung aus wenigen Komponenten aufgebaut ist, können bei kleinem Baumaß der Verstellvorrichtung große Drehmomente erzeugt und damit Bauteile mit hohem Eigengewicht oder hohen äußeren Kräften bewegt werden.

Nach einer vorteilhaften Ausgestaltung der Erfindung sind die erste Hülse und die zweite Hülse der ersten Drehreinrichtung in Richtung der geometrischen linearen Achse der ersten Dreheinrichtung festgelegt. Der Drallkörper der ersten Dreheinrichtung ist angetrieben durch den Antrieb entlang der geometrischen linearen Achse der ersten Dreheinrichtung beweglich. Ferner sind die erste Hülse und die zweite Hülse der zweiten Dreheinrichtung in Richtung der geometrischen linearen Achse der zweiten Dreheinrichtung festgelegt. Der Drallkörper der zweiten Dreheinrichtung ist angetrieben durch den Antrieb in Richtung der geometrischen linearen Achse der zweiten Dreheinrichtung beweglich. Die erste Hülse und die zweite Hülse der beiden Drehrichtungen verändern damit ihre Position bezogen auf die geometrische lineare Ache der ersten und zweiten Dreheinrichtung nicht. Die beiden Drallkörper bewegen sich relativ zu den ersten und zweiten Hülsen entlang der geometrischen linearen Achse um einen Verstellweg.

Nach einer weiteren vorteilhaften Ausgestaltung der Erfindung fällt die geometrische lineare Achse der ersten Dreheinrichtung mit der geometrischen Hülsenachse der ersten Dreheinrichtung zusammen oder ist zu dieser parallel. Ferner fällt die geometrische lineare Achse der zweiten Dreheinrichtung mit der geometrischen Hülsenachse der zweiten Dreheinrichtung zusammen oder ist zu dieser parallel.

Nach einer weiteren vorteilhaften Ausgestaltung der Erfindung ist der Drallkörper in dem ersten Drallkörperabschnitt mit mindestens einem Drallzug ausgestattet. Der Drallzug erstreckt sich an der Außenseite des Drallkörpers. Ferner ist die erste Hülse an ihrer Innenseite mit mindestens einer Drallnut ausgestattet. Dabei steht der erste Drallkörperabschnitt mit der ersten Hülse über den Drallzug und die Drallnut in Eingriff.

Nach einer weiteren vorteilhaften Ausgestaltung der Erfindung ist der Drallkörper in dem zweiten Drallkörperabschnitt mit mindestens einem Drallzug ausgestattet. Dieser erstreckt sich an der Außenseite des Drallkörpers. Ferner ist die zweite Hülse an ihrer Innenseite mit mindestens einer Drallnut ausgestattet. Dabei steht der zweite Drallkörperabschnitt mit der zweiten Hülse über den Drallzug und die Drallnut in Eingriff.

Nach einer weiteren vorteilhaften Ausgestaltung der Erfindung weisen der Drallzug und die Drallnut einen schraubenlinienförmigen Verlauf oder einen linearen Verlauf auf. Wesentlich ist dabei, dass der Drallzug im ersten Drallkörperabschnitt des Drallkörpers von dem Drallzug im zweiten Drallkörperabschnitt desselben Drallkörpers verschieden ist. Die Drallzüge im ersten und zweiten Drallkörperabschnitt eines Drallkörpers können sich in der Windungsrichtung oder in der Windungssteigung unterscheiden. Der Unterschied zwischen dem Drallzug im ersten Drallkörperabschnitt und dem Drallzug im zweiten Drallkörperabschnitt desselben Drallkörpers ist eine Voraussetzung dafür, dass eine Bewegung des Drallkörpers entlang der zugehörigen geometrischen linearen Achse zu einer Drehung der zweiten Hülse um die Hülsenachse führt.

Damit die zweite Hülse der ersten Dreheinrichtung und die zweite Hülse der zweiten Dreheinrichtung mit derselben Drehgeschwindigkeit und in dieselbe Richtung gedreht werden, wenn sich die Drallkörper der ersten und zweiten Dreheinrichtung angetrieben durch den gemeinsamen Antrieb aufeinander zu oder voneinander weg bewegen, sind die beiden Drallkörper spiegelsymmetrisch zueinander. Sie weisen denselben Durchmesser in dem ersten Drallkörperabschnitt und in dem zweiten Drallkörperabschnitt sowie dieselbe axiale Länge auf. Der Drallzug im ersten Drallkörperabschnitt des Drallkörpers der ersten Dreheinrichtung ist symmetrisch zu dem Drallzug im ersten Drallkörperabschnitt des Drallkörpers der zweiten Dreheinrichtung. Entsprechung ist der Drallzug im zweiten Drallkörperabschnitt des Drallkörpers der ersten Dreheinrichtung symmetrisch zu dem Drallzug im zweiten Drallkörperabschnitt des Drallkörpers der zweiten Dreheinrichtung.

Nach einer weiteren vorteilhaften Ausgestaltung der Erfindung sind der Drallzug in dem ersten Drallkörperabschnitt und der Drallzug in dem zweiten Drallkörperabschnitt desselben Drallkörpers gegenläufig. Erster und zweiter Drallkörperabschnitt unterscheiden sich damit in der Windungsrichtung der Drallzüge.

Nach einer weiteren vorteilhaften Ausgestaltung der Erfindung weisen der Drallzug in dem ersten Drallkörperabschnitt und der Drallzug in dem zweiten Drallkörperabschnitt desselben Drallkörpers eine unterschiedliche Steigung auf. Erster und zweiter Drallkörperabschnitt unterscheiden sich damit in der Windungssteigung der Drallzüge. Erster und zweiter Drallkörperabschnitt können sich sowohl in der Windungsrichtung als auch in der Windungssteigung unterscheiden. Die Steigung ist innerhalb eines Drallkörperabschnitts konstant. Das Verhältnis zwischen der Steigung des Drallzugs im ersten Drallkörperabschnitt und der Steigung des Drallzugs im zweiten Drallkörperabschnitt entspricht der Übersetzung.

Nach einer weiteren vorteilhaften Ausgestaltung der Erfindung weisen der Drallzug und die Drallnut das Profil eines gleichschenkligen Trapezes auf.

Nach einer weiteren vorteilhaften Ausgestaltung der Erfindung ist der Drallzug als Kugelgewinde ausgebildet. Er bildet zusammen mit der Drallnut ein Kugelgewindetrieb.

Nach einer weiteren vorteilhaften Ausgestaltung der Erfindung weist der Drallkörper zwischen dem ersten Drallkörperabschnitt und dem zweiten Drallkörperabschnitt einen dritten Drallkörperabschnitt auf. Dabei ist der Außendurchmesser des dritten Drallkörperabschnitts kleiner als der Außendurchmesser des ersten Drallkörperabschnitts und des zweiten Drallkörperabschnitts. Durch den dritten Drallkörperabschnitt ist gewährleistet, dass der erste Drallkörperabschnitt nur mit der ersten Hülse in Eingriff steht und der zweite Drallkörperabschnitt nur mit der zweiten Hülse, wenn sich der Drallkörper entlang der geometrischen linearen Achse bewegt. Es wird ausgeschlossen, dass der erste Drallkörperabschnitt in der zweiten Hülse oder der zweite Drallkörperabschnitt in der ersten Hülse verkantet und die Verstellvorrichtung dadurch blockiert.

Nach einer weiteren vorteilhaften Ausgestaltung der Erfindung weist der dritte Drallkörperabschnitt entlang der geometrischen linearen Achse eine axiale Länge auf, die größer ist, als der maximale Verstellweg, den der Drallkörper angetrieben durch den Antrieb entlang der geometrischen linearen Achse zurücklegt.

Nach einer weiteren vorteilhaften Ausgestaltung der Erfindung umfasst der Antrieb einen Motor und eine Spindelstange, welche durch den Motor um eine geometrische Antriebsachse angetrieben ist. Der Drallkörper der ersten Dreheinrichtung steht in Wirkverbindung mit einem ersten Ende der Spindelstange und ist von dieser angetrieben. Der Drallkörper der zweiten Dreheinrichtung steht in Wirkverbindung mit einem dem ersten Ende entgegen gesetzten zweiten Ende der Spindelstange und ist von dieser angetrieben.

Nach einer weiteren vorteilhaften Ausgestaltung der Erfindung ist die Spindelstange an ihren Enden mit einem Trapezgewinde ausgestattet, welches mit einem Innengewinde des Drallkörpers in Eingriff steht.

Nach einer weiteren vorteilhaften Ausgestaltung der Erfindung ist die Spindelstange als Kugelgewindespindel ausgebildet. Der Drallkörper ist mit einer Spindelmutter ausgestattet, welche zusammen mit der Kugelgewindespindel einen Kugelgewindetrieb bildet.

Nach einer weiteren vorteilhaften Ausgestaltung der Erfindung umfasst der Antrieb einen Hydraulikzylinder, welcher ein Zylinderrohr und eine Kolbenstange umfaßt. Der Drallkörper der ersten Dreheinrichtung ist mit der Kolbenstange des Hydraulikzylinders verbunden, während der Drallkörper der zweiten Dreheinrichtung mit dem Zylinderrohr des Hydraulikzylinders verbunden ist. Bewegt sich die Kolbenstange relativ zu dem Zylinderrohr des Hydraulikzylinders, so bewegen sich die Drallkörper der ersten und zweiten Dreheinrichtung aufeinander zu oder voneinander weg.

Nach einer weiteren vorteilhaften Ausgestaltung der Erfindung umfasst der Antrieb einen Motor, der ein Zahnrad zur Rotation antreibt. Mit dem Zahnrad steht eine erste Zahnstange in Eingriff, die mit dem Drallkörper der ersten Dreheinrichtung verbunden ist. Ferner steht mit dem Zahnrad eine zweite Zahnstange in Eingriff, die mit Drallkörper der zweiten Dreheinrichtung verbunden ist. Bevorzugt sind die erste Zahnstange und die zweite Zahnstange parallel zueinander angeordnet. Bei einer Rotation des Zahnrades werden die beiden Zahnstangen mit denen ihnen zugeordneten Drallkörpern aufeinander zu und voneinander weg bewegt.

Nach einer weiteren vorteilhaften Ausgestaltung der Erfindung stimmt bei der ersten Dreheinrichtung und/ oder bei der zweiten Dreheinrichtung die Länge der ersten Hülse in axialer Richtung mit der Länge der zweiten Hülse in axialer Richtung im wesentlichen überein. Dabei ist die axiale Richtung auf die geometrische lineare Achse der ersten oder zweiten Dreheinrichtung bezogen.

Nach einer weiteren vorteilhaften Ausgestaltung der Erfindung ist die erste Hülse mit einem ersten Befestigungsteil ausgestattet, das die erste Hülse mit einem feststehenden Bauteil drehfest und in axialer Richtung unverschieblich verbindet. Ferner ist die zweite Hülse mit einem zweiten Befestigungsteil ausgestattet, das die zweite Hülse mit einem zu bewegenden Bauteil drehfest und in axialer Richtung unverschieblich verbindet. Das erste Befestigungsteil dient dazu, die erste Hülse der ersten Dreheinrichtung und die erste Hülse der zweiten Dreheinrichtung mit dem feststehenden Bauteil zu verbinden. Dabei weist die erste Hülse der ersten Dreheinrichtung und die erste Hülse der zweiten Dreheinrichtung jeweils ein erstes Befestigungsteil auf. Darüber hinaus dient das zweite Befestigungsteil dazu, die zweite Hülse der ersten Dreheinrichtung und die zweite Hülse der zweiten Dreheinrichtung mit dem zu bewegenden Bauteil zu verbinden. Dabei weist die zweite Hülse der ersten Dreheinrichtung und die zweite Hülse der zweiten Dreheinrichtung jeweils ein zweites Befestigungsteil auf. Die ersten und zweiten Befestigungsteile und ihre Anordnung an den ersten und zweiten Hülsen sind so ausgebildet, dass sie großen Kräften standhalten, die beim Bewegen des zu bewegenden Bauteils auftreten.

Nach einer weiteren vorteilhaften Ausgestaltung der Erfindung ist die erste Hülse einstückig mit dem ersten Befestigungsteil ausgeführt. Darüber hinaus ist vorteilhafterweise die zweite Hülse einstückig mit dem zweiten Befestigungsteil ausgeführt. Das Befestigungsteil kann integral mit der zugehörigen Hülse ausgebildet sein. So kann beispielsweise das Befestigungsteil an die zugehörige Hülse angegossen oder angeschweißt sein. Andere stoffschlüssige Verbindungen sind ebenfalls möglich.

Nach einer weiteren vorteilhaften Ausgestaltung der Erfindung ist die erste Hülse formschlüssig mit dem ersten Befestigungsteil verbunden. Darüber hinaus ist vorteilhafterweise die zweite Hülse formschlüssig mit dem zweiten Befestigungsteil verbunden. Eine formschlüssige Verbindung kann beispielsweise über ein Polygon, eine Kerbverzahnung, eine Passfederverbindung oder eine Rändelverbindung erzielt werden.

Nach einer weiteren vorteilhaften Ausgestaltung der Erfindung ist die erste Hülse kraftschlüssig mit dem ersten Befestigungsteil verbunden. Darüber hinaus ist vorteilhafterweise die zweite Hülse kraftschlüssig mit dem zweiten Befestigungsteil verbunden. Die kraftschlüssige Verbindung kann beispielsweise über eine Pressverbindung bzw. eine Schrumpfverbindung realisiert werden.

Nach einer weiteren vorteilhaften Ausgestaltung der Erfindung erstreckt sich das erste Befestigungsteil in axialer Richtung entlang der Außenseite der ersten Hülse. Dabei ist die erste Hülse im wesentlichen entlang ihrer gesamten axialen Länge abgestützt. Darüber hinaus erstreckt sich das zweite Befestigungsteil in axialer Richtung entlang der Außenseite der zweiten Hülse erstreckt und stützt die zweite Hülse im wesentlichen entlang ihrer gesamten axialen Länge ab. Dabei sind die axiale Richtung und die axiale Länge auf die geometrische lineare Achse der ersten oder zweiten Dreheinrichtung bezogen.

Nach einer weiteren vorteilhaften Ausgestaltung der Erfindung ist das erste Befestigungsteil an der Außenseite der ersten Hülse tangential angeordnet, derart dass die Einleitung der auf die erste Hülse wirkenden Kraft in das erste Befestigungsteil in einer Richtung erfolgt, die von der geometrischen linearen Achse der ersten oder zweiten Dreheinrichtung verschieden ist. Die Richtung der Krafteinleitung kann jedoch zu der geometrischen linearen Achse der ersten oder zweiten Dreheinrichtung parallel sein. Entsprechendes gilt für die Einleitung von Kräften von dem zweiten Befestigungsteil in die zweite Hülse.

Nach einer weiteren vorteilhaften Ausgestaltung der Erfindung sind das erste Befestigungsteil und/ oder das zweite Befestigungsteil als Flanschabschnitt ausgebildet.

Nach einer weiteren vorteilhaften Ausgestaltung der Erfindung sind das erste Befestigungsteil und/ oder das zweite Befestigungsteil als Rahmen ausgebildet.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung sind mehrere Ausführungsbeispiele des Erfindungsgegenstandes dargestellt. Es zeigen:
- Figur 1: erstes Ausführungsbeispiel einer Verstellvorrichtung in perspektivischer Ansicht in einer ersten Stellung,
- Figur 2: Verstellvorrichtung gemäß Figur 1 in einer Seitenansicht,
- Figur 3: Verstellvorrichtung gemäß Figur 1 in einer Seitenansicht, wobei die Hülsen der ersten und zweiten Dreheinrichtung durchsichtig sind,
- Figur 4: Verstellvorrichtung gemäß Figur 1 in einer Ansicht von oben, wobei die Hülsen der Dreheinrichtungen entlang der mit A -A in Figur 2 gekennzeichneten Ebene geschnitten sind,
- Figur 5: erste Dreheinrichtung der Verstellvorrichtung gemäß Figur 1 in einer perspektivischen Darstellung, wobei die Hülsen durchsichtig sind,
- Figur 6: Verstellvorrichtung gemäß Figur 1 in perspektivischer Darstellung in einer zweiten Stellung,
- Figur 7: Verstellvorrichtung gemäß Figur 6 in Seitenansicht,
- Figur 8: Verstellvorrichtung gemäß Figur 6 in einer Ansicht von oben, wobei die Hülsen der ersten und zweiten Dreheinrichtung durchsichtig sind,
- Figur 9: Verstellvorrichtung gemäß Figur 6 in einer Ansicht von oben, wobei die Hülsen der Dreheinrichtungen entlang der mit B - B in Figur 7 gekennzeichneten Ebene geschnitten sind,
- Figur 10: erste Dreheinrichtung der Verstellvorrichtung gemäß Figur 6 in einer perspektivischen Darstellung, wobei die Hülsen durchsichtig sind,
- Figur 11: zweite Dreheinrichtung im Längsschnitt entlang der in Figur 7 mit C-C gekennzeichneten Ebene,
- Figur 12: Drallkörper der Verstellvorrichtung gemäß Figur 1 in verschiedenen Ansichten,
- Figur 13: Hülse der Verstellvorrichtung gemäß Figur 1 in perspektivischer Ansicht,
- Figur 14: Hülse der Verstellvorrichtung gemäß Figur 1 im Längsschnitt,
- Figur 15: Verstellvorrichtung gemäß Figur 1 in einer Stellung gemäß Figur 6 mit Bauteil,
- Figur 16: zweites Ausführungsbeispiel einer Verstellvorrichtung in perspektivischer Ansicht,
- Figur 17: Verstellvorrichtung gemäß Figur 16 mit durchsichtigen Hülsen,
- Figur 18: drittes Ausführungsbeispiel einer Verstellvorrichtung in Seitenansicht,
- Figur 19: Schnitt durch eine erste Hülse und das zugehörige Befestigungselement mit formschlüssiger Verbindung.

### Beschreibung der Ausführungsbeispiele

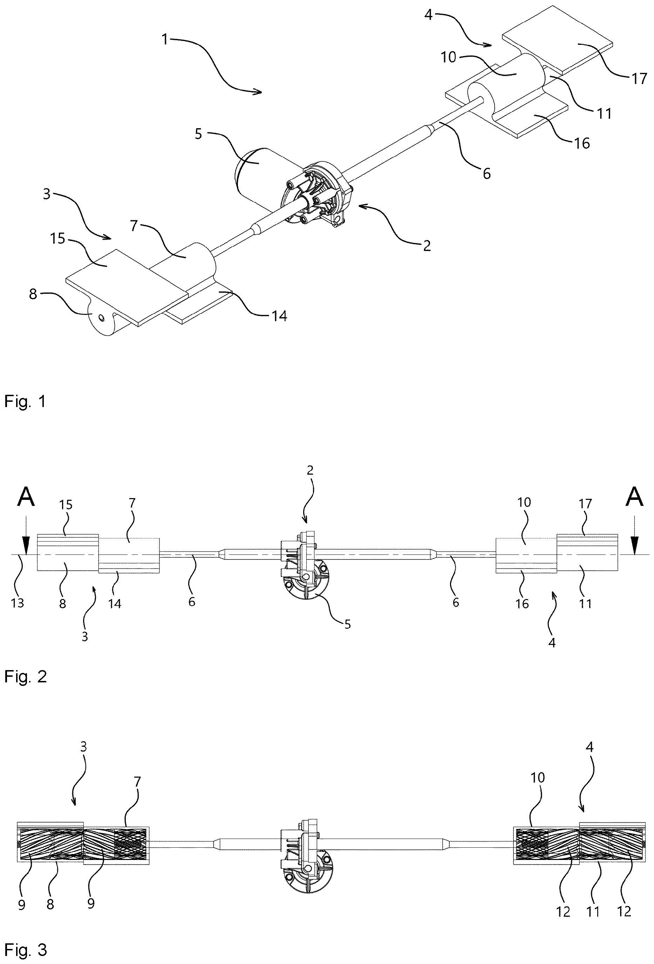

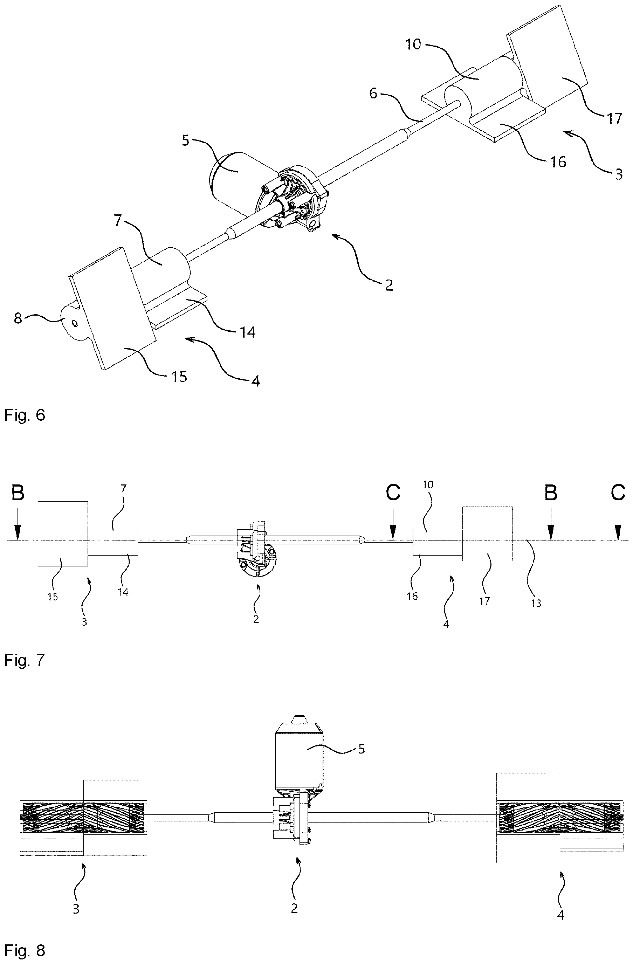

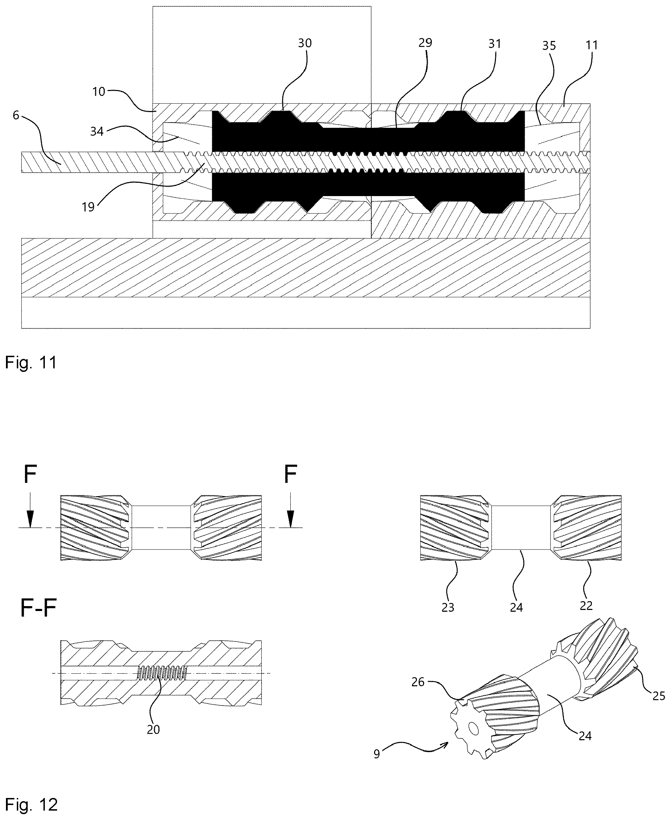

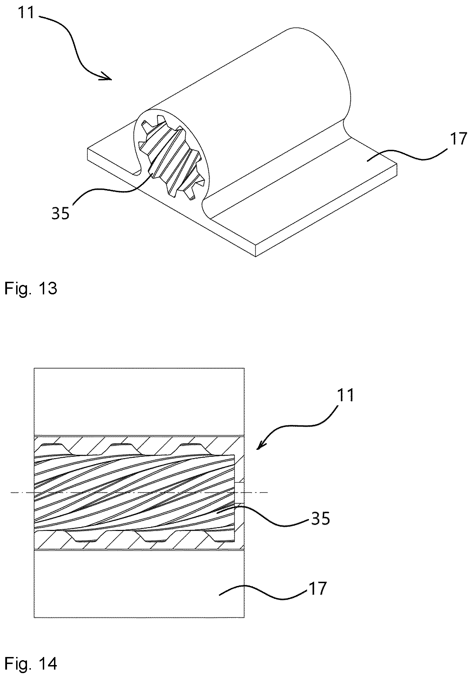

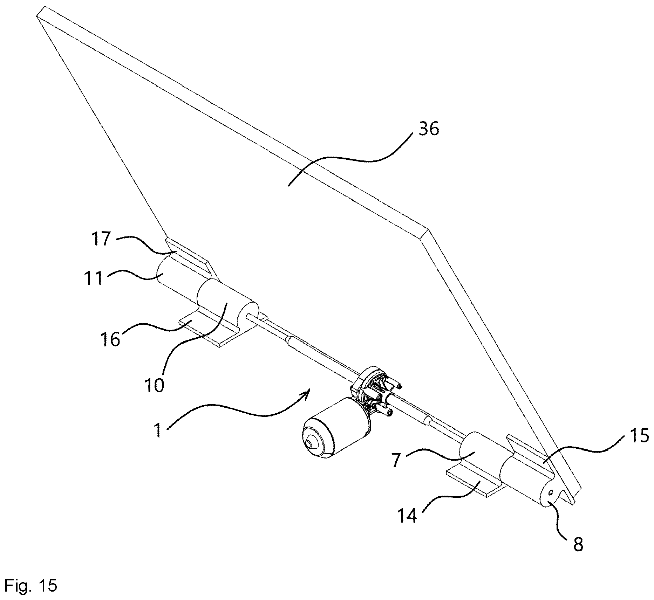

In den Figuren 1 bis 15 ist ein erstes Ausführungsbeispiel einer Verstellvorrichtung 1 mit einem Antrieb 2, einer ersten Dreheinrichtung 3 und einer zweiten Dreheinrichtung 4 dargestellt. Der Antrieb 2 umfasst einen Motor 5 und eine Spindelstange 6. Die erste Drehrichtung 3 weist eine erste Hülse 7, eine zweite Hülse 8 und einen Drallkörper 9 auf. Die zweite Dreheinrichtung 4 weist entsprechend eine erste Hülse 10, eine zweite Hülse 11 und einen Drallkörper 12 auf. Der Motor 5 treibt die Spindelstange 6 zur Rotation an. Die Spindelstange 6 wiederum treibt die erste und zweite Dreheinrichtung 3, 4 an. Dadurch werden die zweite Hülse 8 der ersten Dreheinrichtung 3 und die zweite Hülse 11 der zweiten Dreheinrichtung 4 um eine geometrische Hülsenachse 13 gedreht. Die Hülsenachse 13 der ersten Dreheinrichtung 3 fällt mit der Hülsenachse der zweiten Dreheinrichtung 4 zusammen. Bei einer Drehung der zweiten Hülsen 8, 11 gehen die erste und zweite Dreheinrichtung 3, 4 von einer in Figur 1 bis 5 dargestellten ersten Stellung in eine in Figur 6 bis 10 dargestellte zweite Stellung über. Die ersten Hülsen 7, 10 und die zweiten Hülsen 8, 11 der ersten und zweiten Dreheinrichtung 3, 4 weisen Befestigungsteile 14, 15, 16, 17 auf. Mit den Befestigungsteilen 14, 16 können die erste Hülse 7 der ersten Dreheinrichtung 3 und die erste Hülse 10 der zweiten Dreheinrichtung an einem feststehenden Bauteil oder einer feststehenden Basis befestigt werden. Diese Befestigungsteile 14, 16 werden auch als erste Befestigungsteile bezeichnet. Ein feststehendes Bauteil ist in der Zeichnung nicht dargestellt. An den Befestigungsteilen 15, 17 der zweiten Hülsen 8, 11 der ersten und zweiten Dreheinrichtung 3, 4 kann ein zu bewegendes Bauteil 36 befestigt werden. Dies ist in Figur 15 dargestellt. Die Befestigungsteile 15, 17 werden auch als zweite Befestigungsteile bezeichnet. Durch die Bewegung der zweiten Hülsen 8, 11 relativ zu den ersten Hülsen 7, 10 kann ein an den Befestigungsteilen 15, 17 der zweiten Hülsen angeordnetes Bauteil 36 von einer Schließstellung in eine Öffnungsstellung oder umgekehrt bewegt werden.

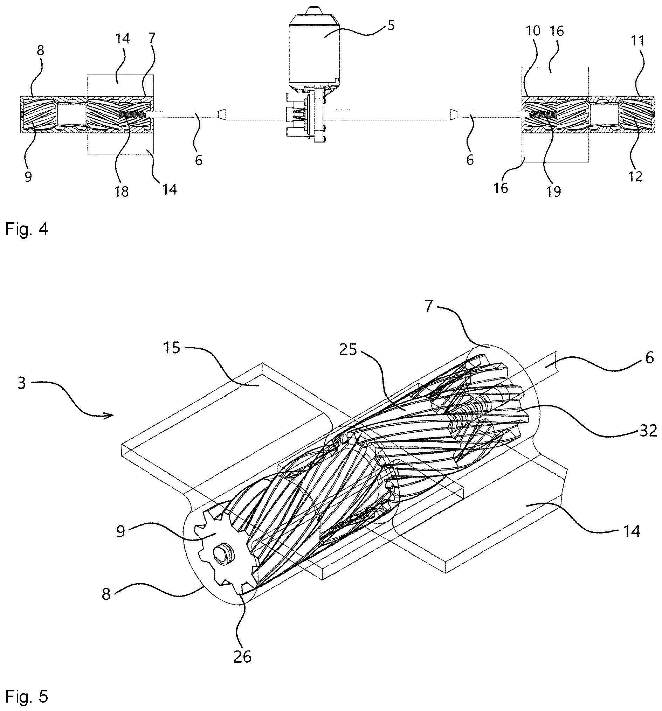

In den Figuren 5, 10, 11, 12, 13 und 14 sind die erste Dreheinrichtung 3 sowie der Drallkörper 9, die erste Hülse 10 und die zweite Hülse 11 im Detail dargestellt. Die Spindelstange 6 weist an ihren beiden entgegen gesetzten Enden ein Trapezgewinde 18, 19 auf. Jeder der beiden Drallkörper 9, 12 ist mit einem Trapezinnengewinde 20 ausgestattet, das mit einem der Trapezgewinde 18, 19 der Spindelstange 6 in Eingriff steht.

Der Drallkörper 9 der ersten Dreheinrichtung 3 weist einen ersten Drallkörperabschnitt 22, einen zweiten Drallkörperabschnitt 23 und einen dritten Drallkörperabschnitt 24 auf. Jeder der drei Drallkörperabschnitte ist zylindrisch. Der dritte Drallkörperabschnitt 24 befindet sich dabei zwischen dem ersten Drallkörperabschnitt 22 und dem zweiten Drallkörperabschnitt 23. Der erste Drallkörperabschnitt 22 weist einen Drallzug 25 auf, der sich wie eine Helix um den Mantel des ersten Drallkörperabschnitts 22 windet. Der schraubenförmig verlaufende Drallzug 25 bildet eine Erhebung. Er steht radial nach außen über die übrige Oberfläche des ersten Drallkörperabschnitts 22 vor. Der zweite Drallkörperabschnitt 23 weist einen Drallzug 26 auf, der sich wie eine Helix um den Mantel des zweiten Drallkörperabschnitt 23 windet. Der schraubenförmig verlaufende Drallzug 26 steht ebenfalls radial nach außen über die übrige Oberfläche des zweiten Drallkörperabschnitts 23 vor. Dabei unterscheiden sich der Drallzug 25 und der Drallzug 26 in ihrer Windungsrichtung. Sie sind gegenläufig. Darüber hinaus ist die Steigung des Drallzugs 25 und des Drallzugs 26 gleich. Der dritte Drallkörperabschnitt 24 weist einen kleineren Außendurchmesser auf als der erste Drallkörperabschnitt 22 und der zweite Drallkörperabschnitt 23.

Der Drallkörper 12 der zweiten Dreheinrichtung 4 ist entsprechend aufgebaut. Er weist einen ersten Drallkörperabschnitt, einen zweiten Drallkörperabschnitt und einen dritten Drallkörperabschnitt auf. Der erste Drallkörperabschnitt und der zweite Drallkörperabschnitt sind jeweils mit einem Drallzug 30, 31 ausgestattet, die sich wie eine Helix um den Mantel des entsprechenden Drallkörperabschnitts winden. Die schraubenförmig verlaufenden Drallzüge stehen radial nach außen über die übrige Oberfläche des jeweiligen Drallkörperabschnitts über. Der Drallzug 30 und der Drallzug 31 sind gegenläufig. Darüber hinaus weisen sie die gleiche Steigung auf. Der dritte Drallkörperabschnitt befindet sich zwischen dem ersten Drallkörperabschnitt und dem zweiten Drallkörperabschnitt. Der dritte Drallkörperabschnitt weist einen kleineren Außendurchmesser auf als der erste Drallkörperabschnitt und als der zweite Drallkörperabschnitt.

Der Drallkörper 9 der ersten Dreheinrichtung 3 und der Drallkörper 12 der zweiten Dreheinrichtung 12 sind symmetrisch. Der Drallzug 25 im ersten Drallkörperabschnitt 22 des Drallkörpers 9 verläuft gegenläufig zu dem Drallzug 30 im ersten Drallkörperabschnitt des Drallkörpers 12. Ferner verläuft der Drallzug 26 im zweiten Drallkörperabschnitt 23 des Drallkörpers 9 gegenläufig zu dem Drallzug 31 im zweiten Drallkörperabschnitt des Drallkörpers 12. Abgesehen davon sind die beiden Drallkörper 9, 12 identisch.

Die Drallzüge 25, 26, 30, 31 der beiden Drallkörper 9, 12 sind trapezförmig.

Die erste Hülse 7 der ersten Dreheinrichtung 3 weist eine Drallnut 32 auf, mit der der Drallzug 25 des ersten Drallkörperabschnitts 22 des Drallkörpers 9 in Eingriff steht. Die Drallnut 32 weist entsprechend zu dem Drallzug 25 einen schraubenförmigen Verlauf auf. Die zweite Hülse 8 der ersten Dreheinrichtung 3 weist eine Drallnut 33 auf, mit der der Drallzug 26 des zweiten Drallkörperabschnitts 23 in Eingriff steht. Die Drallnut 33 weist entsprechend zu dem Drallzug 26 einen schraubenförmigen Verlauf auf.

Die erste Hülse 10 der zweiten Dreheinrichtung 4 weist eine Drallnut 34 auf, mit der der Drallzug 30 des ersten Drallkörperabschnitts 27 des Drallkörpers 12 in Eingriff steht. Die Drallnut 34 weist entsprechend zu dem Drallzug 30 einen schraubenförmigen Verlauf auf. Die zweite Hülse 11 der zweiten Dreheinrichtung 4 weist eine Drallnut 35 auf, mit der der Drallzug 31 des zweiten Drallkörperabschnitts 28 in Eingriff steht. Die Drallnut 35 weist entsprechend zu dem Drallzug 31 einen schraubenförmigen Verlauf auf.

Die Drallnuten 32, 33, 34, 35 sind trapezförmig.

Die Drallzüge 25, 30 in den ersten Drallkörperabschnitten 22, 27 der beiden Drallkörper 9, 12 stehen in Eingriff mit den Drallnuten 32, 34 der ersten Hülsen 7, 10 der ersten und zweiten Dreheinrichtung 3, 4. Sie sorgen für eine Zwangsführung der Drallkörper 9, 12 in den ersten Hülsen.

Eine Rotation der Spindelstange 6 führt aufgrund der Zwangsführung der Drallkörper 9, 12 in den jeweils ersten Hülsen 7, 10 der ersten und zweiten Dreheinrichtung 3, 4 zu einer Bewegung der Drallkörper entlang einer geometrischen linearen Achse, welche im vorliegenden Ausführungsbeispiel mit der Längsachse der Spindelstange 6 und der geometrischen Hülsenachse 13 zusammenfällt. Da der Drallzug 25 im ersten Drallkörperabschnitt 22 des Drallkörpers 9 der ersten Dreheinrichtung 3 symmetrisch zum Drallzug 30 im ersten Drallkörperabschnitt 27 des Drallkörpers 12 der zweiten Dreheinrichtung 4 und damit gegenläufig ist, sorgt eine Drehung der Spindelstange 6 dafür, dass sich die beiden Drallkörper 9, 12 entweder aufeinander zu oder voneinander weg bewegen.

Die Bewegung der Drallkörper 9, 12 wird auf die zweiten Hülsen 8, 11 der ersten und zweiten Dreheinrichtung übertragen und sorgt für eine Rotation der zweiten Hülsen 8, 11 um die Hülsenachse 13.

Die ersten Befestigungsteile 14, 16 sind tangential an den ersten Hülsen 7, 10 angeordnet und erstrecken sich an der Außenseite der ersten Hülsen 7, 10 über ihre gesamte axiale Länge. Dadurch werden die ersten Hülsen 7, 10 entlang ihrer gesamten axialen Länge durch die ersten Befestigungsteile 14, 16 abgestützt. Die ersten Befestigungsteile 14, 16 können beispielsweise mittels Schrauben an einem feststehenden Bauteil befestigt sein. Diese Schrauben und das feststehende Bauteil sind in der Zeichnung nicht dargestellt. Die Befestigungsteile sorgen damit dafür, dass sich die ersten Hülsen 14, 16 in axialer Richtung nicht verschieben können und sich nicht drehen können, wenn über die Drallkörper 9, 12 große Kräfte auf sie übertragen werden. Die zweiten Befestigungsteile 15, 17 sind entsprechend tangential an den zweiten Hülsen 8, 11 angeordnet und erstrecken sich an den Außenseiten der zweiten Hülsen 8, 11 über ihre gesamte axiale Länge. Die zweiten Hülsen 8, 11 werden entlang ihrer gesamten axialen Länge durch die zweiten Befestigungsteile 15, 17 abgestützt. Die zweiten Befestigungsteile 15, 17 können ebenfalls über Schrauben, welche in der Zeichnung nicht dargestellt sind, an einem zu bewegengen Bauteil befestigt sein. Die zweiten Befestigungsteile 15, 17 sorgen dafür, dass sich die zweiten Hülsen 8, 11 nicht in unerwünschter Weise in axialer Richtung verschieben oder drehen, wenn durch das zu bewegende Bauteile große Kräfte auf die zweiten Hülsen 8, 11 einwirken. Die Befestigungsteile 14, 15, 16, 17 sind in einem Stück mit der jeweils zugehörigen Hülse 7, 8, 10, 11 ausgeführt.

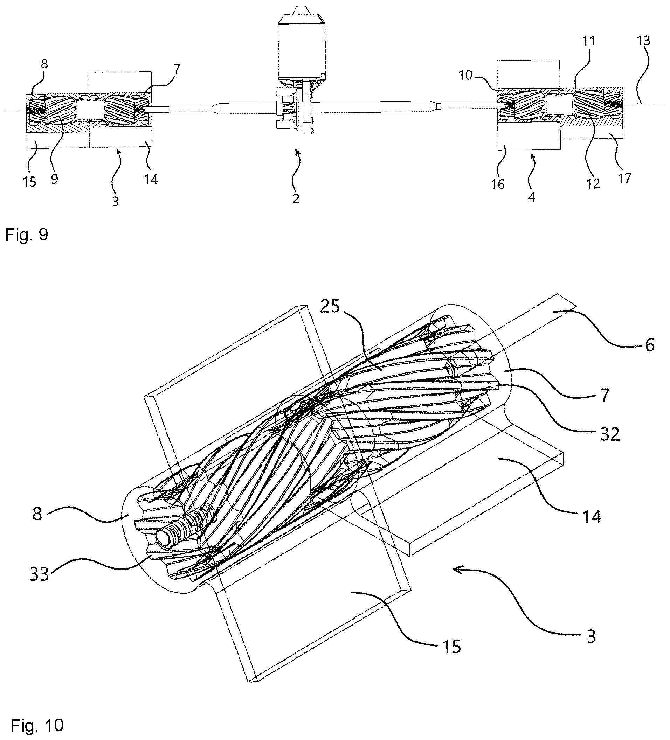

In den Figuren 1 bis 5 ist die Verstellvorrichtung 1 in einer ersten Stellung dargestellt. Dabei sind die an den zweiten Hülsen 8, 11 angeordneten Befestigungsteile 15, 17 parallel zu den Befestigungsteilen 14, 16 ausgerichtet, die an den ersten Hülsen 7, 10 angeordnet sind. Figur 4 zeigt die Position der beiden Drallkörper 9, 12 der ersten und zweiten Dreheinrichtung 3, 4 in dieser Stellung der Verstellvorrichtung 1. In den Figuren 6 bis 10 ist die Verstellvorrichtung in einer zweiten Stellung dargestellt. Die an den zweiten Hülsen 8, 11 angeordneten Befestigungsteile 15, 17 sind nicht mehr parallel zu den Befestigungsteilen 14, 16 ausgerichtet, die an den ersten Hülsen 7, 10 angeordnet sind, sondern unter einem Winkel von ca. 60°. Figur 9 zeigt die Position der beiden Drallkörper 9, 12 der ersten und zweiten Dreheinrichtung 3, 4 in dieser Stellung der Verstellvorrichtung. Im Vergleich zu Figur 4 haben sich die Drallkörper 9, 12 aufeinander zubewegt. Der Vergleich der beiden Figuren 4 und 9 zeigt darüber hinaus, dass der Drallkörper 9 der ersten Dreheinrichtung 3 mit seinem ersten Drallkörperabschnitt 22 stets in Eingriff mit der ersten Hülse 7 und mit seinem zweiten Drallkörperabschnitt 23 in Eingriff mit der zweiten Hülse 8 steht. Entsprechend steht der Drallkörper 12 der zweiten Dreheinrichtung 4 mit seinem ersten Drallkörperabschnitt stets in Eingriff mit der ersten Hülse 10 und mit seinem zweiten Drallkörperabschnitt in Eingriff mit der zweiten Hülse 11. Der dritte Drallkörperabschnitt 24 mit seinem kleineren Querschnitt sorgt dafür, dass der Drallkörper bei seiner Bewegung relativ zu der ersten und zweiten Hülse nicht verkantet.

Ein Bauteil 36, das über die zweiten Befestigungsteile 15, 17 an den zweiten Hülsen 8, 11 der ersten und zweiten Dreheinrichtung 3, 4 angeordnet ist, überträgt seine Gewichtskraft oder eine äußere Kraft, die auf das Bauteil wirkt, über die zweiten Befestigungsteile 15, 17 auf die zweiten Hülsen 8, 11, welche die Kraft ihrerseits auf die Drallkörper 9, 12 übertragen. Diese wiederum stützen sich an der Spindelstange 6 ab und leiten eine in Richtung der Längsachse der Spindelstange 6 wirkende Kraft in die Spindelstange ein. Die von der ersten Dreheinrichtung 3 in die Spindelstange 6 eingeleitete Kraft weist denselben Betrag auf, wie die von der zweiten Dreheinrichtung 4 in die Spindelstange eingeleitete Kraft. Da die beiden Kräfte entgegengesetzt gerichtet sind, heben sie sich gegenseitig auf, so dass die Summe Null ist.

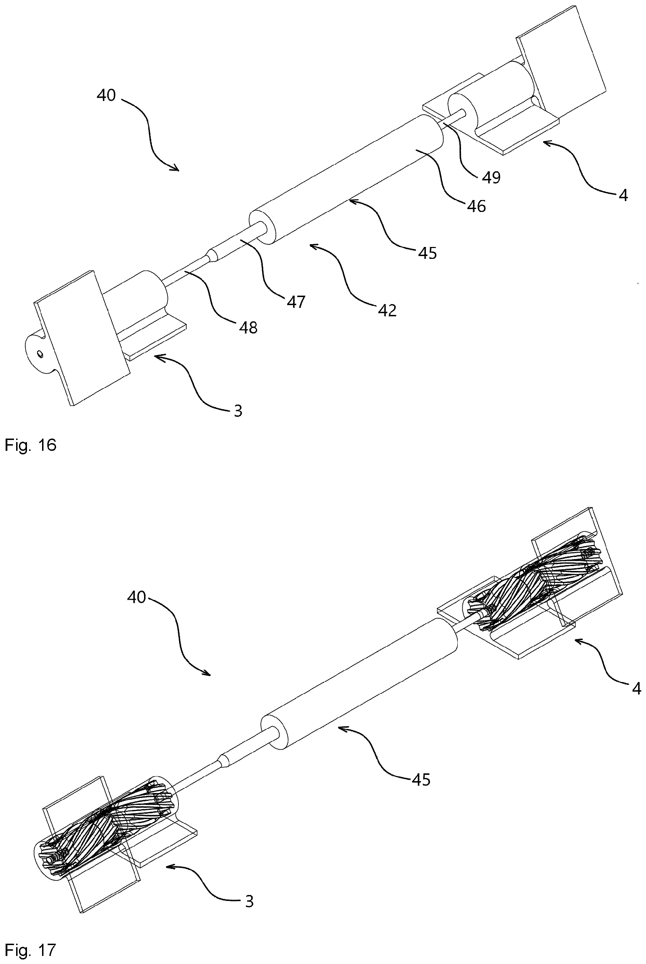

In den Figuren 16 und 17 ist ein zweites Ausführungsbeispiel einer Verstellvorrichtung 40 dargestellt. Diese unterscheidet sich von dem ersten Ausführungsbeispiel hinsichtlich des Antriebs 42. Anstelle eines Motors mit Spindelstange umfasst der Antrieb 42 einen Hydraulikzylinder 45 und Stangen 48, 49. Dabei ist eine Kolbenstange 46 des Hydraulikzylinders 45 über die erste Stange 48 mit einer ersten Dreheinrichtung 3 verbunden, während ein Zylinderrohr 47 des Hydraulikzylinders 45 über eine zweite Stange 49 mit einer zweiten Dreheinrichtung 4 verbunden ist. Die erste Dreheinrichtung 3 und die zweite Dreheinrichtung 4 stimmt dabei mit der ersten und zweiten Dreheinrichtung des ersten Ausführungsbeispiels gemäß Figuren 1 bis 15 überein. Bei einer Bewegung der Kolbenstange 46 relativ zu dem Zylinderrohr 47 wirkt auf die beiden Dreheinrichtungen 3, 4 eine Kraft in axialer Richtung. Diese Kraft wird über die Stangen 48, 49 auf die beiden Drallkörper 9, 12 der ersten und zweiten Dreheinrichtung 3, 4 übertragen. Im Übrigen entspricht die Funktionsweise derjenigen der Verstellvorrichtung gemäß Figuren 1 bis 15.

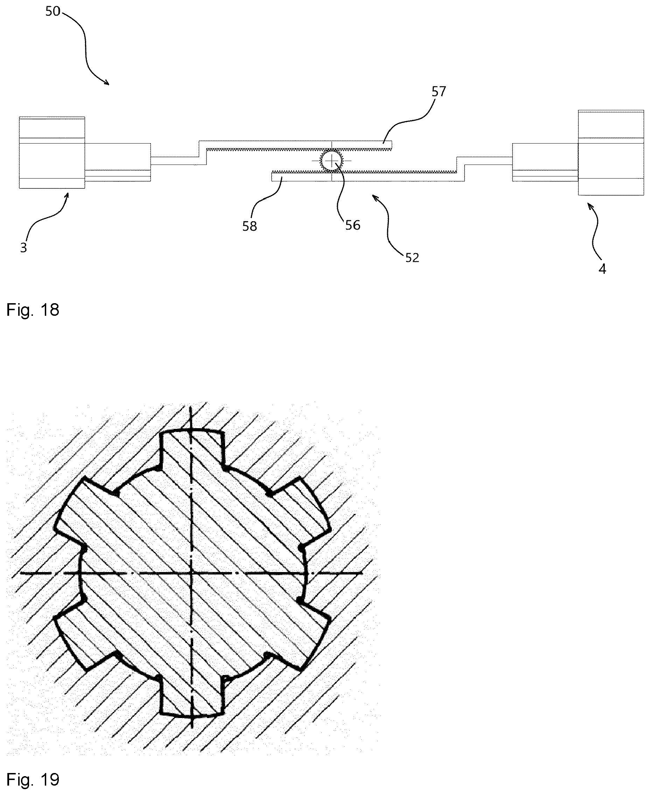

In Figur 18 ist ein drittes Ausführungsbeispiel einer Verstellvorrichtung 50 dargestellt. Dieses unterscheidet sich von dem ersten und zweiten Ausführungsbeispiel hinsichtlich des Antriebs 52. Bei dem in Figur 18 dargestellten Ausführungsbeispiel ist ein in der Zeichnung nicht erkennbarer Motor vorgesehen, der ein Zahnrad 56 zur Rotation antreibt. Mit dem Zahnrad 56 stehen eine erste Zahnstange 57 und eine zweite Zahnstange 58 in Eingriff. Eine Rotation des Zahnrades 56 wird dabei in eine lineare Bewegung der beiden Zahnstangen 57, 58 übertragen. Die erste Zahnstange 57 ist mit einer ersten Dreheinrichtung 3 verbunden. Die zweite Zahnstange 58 ist mit einer zweiten Dreheinrichtung 4 verbunden. Diese beiden Dreheinrichtungen sind mit den beiden Dreheinrichtungen des ersten Ausführungsbeispiels einer Verstellvorrichtung gemäß Figuren 1 bis 15 identisch und stimmen hinsichtlich der Wirkweise überein.

Figur 19 zeigt eine Alternative für eine Verbindung zwischen einer ersten Hülse und einem zugehörigen ersten Befestigungsteil. Hierbei handelt es sich um eine formschlüssige Verbindung. Die innere Komponente in der Darstellung gemäß Figur 19 steht dabei für die erste Hülse. Die äußere Komponente der Darstellung gemäß Figur 19 steht für das zugehörige erste Befestigungsteil. Die innere Komponente weist eine Außenverzahnung auf. Die äußere Komponente weist eine Innenverzahnung auf. Die formschlüssige Verbindung ist als Keilwellenverzahnung ausgebildet. Über eine derartige formschlüssige Verbindung kann in entsprechender Weise eine zweite Hülse mit einem ihr zugeordneten zweiten Befestigungsteil verbunden sein.

Sämtliche Merkmale der Erfindung können sowohl einzeln als auch in beliebiger Kombination miteinander erfindungswesentlich sein.

### Bezugszahlen

- 1: Verstellvorrichtung
- 2: Antrieb
- 3: erste Dreheinrichtung
- 4: zweite Dreheinrichtung
- 5: Motor
- 6: Spindelstange
- 7: erste Hülse
- 8: zweite Hülse
- 9: Drallkörper
- 10: erste Hülse
- 11: zweite Hülse
- 12: Drallkörper
- 13: Hülsenachse
- 14: Befestigungsteil
- 15: Befestigungsteil
- 16: Befestigungsteil
- 17: Befestigungsteil
- 18: Trapezgewinde
- 19: Trapezgewinde
- 20: Trapezinnengewinde
- 22: erster Drallkörperabschnitt
- 23: zweiter Drallkörperabschnitt
- 24: dritter Drallkörperabschnitt
- 25: Drallzug
- 26: Drallzug
- 30: Drallzug
- 31: Drallzug
- 32: Drallnut
- 33: Drallnut
- 34: Drallnut
- 35: Drallnut
- 36: Bauteil
- 40: Verstellvorrichtung
- 42: Antrieb
- 45: Hydraulikzylinder
- 46: Kolbenstange
- 47: Zylinderrohr
- 48: erste Stange
- 49: zweite Stange
- 50: Verstellvorrichtung
- 52: Antrieb
- 56: Zahnrad
- 57: erste Zahnstange
- 58: zweite Zahnstange

## Patentansprüche

1. Verstellvorrichtung
mit einem Antrieb (2, 42, 52),
mit einer durch den Antrieb (2, 42, 52) angetriebenen ersten Dreheinrichtung (3),
mit einer durch den Antrieb (2, 42, 52) angetriebenen zweiten Dreheinrichtung (4),
wobei die erste Dreheinrichtung (3) und die zweite Dreheinrichtung (4) jeweils einen Drallkörper (9, 12), der in Wirkverbindung mit dem Antrieb (2, 42, 52) steht und von diesem entlang einer geometrischen linearen Achse angetrieben ist, eine erste Hülse (7, 10) und eine zweite Hülse (8, 11), welche gegenüber der ersten Hülse (7, 10) um eine geometrische Hülsenachse (13) drehbar ist, aufweisen, wobei der Drallkörper (9, 12) einen ersten Drallkörperabschnitt (22) aufweist, der in Eingriff mit der ersten Hülse steht (7, 10) und einen zweiten Drallkörperabschnitt (23), der mit der zweiten Hülse (8, 11) in Eingriff steht, derart, dass die erste und zweite Dreheinrichtung (3, 4) eine Antriebskraft des Antriebs (2, 42, 52) in eine Drehung der zweiten Hülse (8, 11) relativ zu der ersten Hülse (7, 10) um die Hülsenachse (13) umwandeln,
wobei die geometrische lineare Achse der ersten Dreheinrichtung (3) mit der geometrischen linearen Achse der zweiten Dreheinrichtung (4) übereinstimmt oder zu dieser parallel ist,
wobei sich eine erste axiale Kraft, mit der sich der Drallkörper (9) der ersten Dreheinrichtung (3) über die erste Hülse (7) der ersten Dreheinrichtung (3) an dem Antrieb (2, 42, 52) entlang der geometrischen linearen Achse der ersten Dreheinrichtung (3) abstützt, gleich groß und entgegengesetzt zu einer zweiten axialen Kraft ist, mit der sich der Drallkörper (12) der zweiten Dreheinrichtung (4) über die erste Hülse (10) der zweiten Dreheinrichtung (4) an dem Antrieb (2, 42, 52) entlang der geometrischen linearen Achse der zweiten Dreheinrichtung (4) abstützt, und sich die erste axiale Kraft und die zweite axiale Kraft gegenseitig aufheben.

2. Verstellvorrichtung nach Anspruch 1, **dadurch gekennzeichnet, dass** die erste Hülse (7) und die zweite Hülse (8) der ersten Drehreinrichtung (3) in Richtung der geometrischen linearen Achse der ersten Dreheinrichtung (3) festgelegt sind und der Drallkörper (9) der ersten Dreheinrichtung (3) angetrieben durch den Antrieb (2, 42, 52) entlang der geometrischen linearen Achse der ersten Dreheinrichtung (3) beweglich ist, und dass die erste Hülse (10) und die zweite Hülse (11) der zweiten Dreheinrichtung (4) in Richtung der geometrischen linearen Achse der zweiten Dreheinrichtung (4) festgelegt sind und der Drallkörper (12) der zweiten Dreheinrichtung (4) angetrieben durch den Antrieb (2, 42, 52) in Richtung der geometrischen linearen Achse der zweiten Dreheinrichtung (4) beweglich ist.

3. Verstellvorrichtung nach Anspruch 1 oder 2, **dadurch gekennzeichnet, dass** die geometrische lineare Achse der ersten Dreheinrichtung (3) mit der geometrischen Hülsenachse (13) der ersten Dreheinrichtung (3) zusammenfällt oder zu dieser parallel ist, und dass die geometrische lineare Achse der zweiten Dreheinrichtung (4) mit der geometrischen Hülsenachse (13) der zweiten Dreheinrichtung (4) zusammenfällt oder zu dieser parallel ist.

4. Verstellvorrichtung nach einem der vorhergehenden Ansprüche, **dadurch gekennzeichnet, dass** der Drallkörper (9, 12) in dem ersten Drallkörperabschnitt (22) mit mindestens einem Drallzug (25, 30) und die erste Hülse (7, 10) an ihrer Innenseite mit mindestens einer Drallnut (32, 34) ausgestattet ist, und dass der erste Drallkörperabschnitt (22) mit der ersten Hülse (7, 10) über den Drallzug (25, 30) und die Drallnut (32, 34) in Eingriff steht.

5. Verstellvorrichtung nach einem der vorhergehenden Ansprüche, **dadurch gekennzeichnet, dass** der Drallkörper (9, 12) in dem zweiten Drallkörperabschnitt (23) mit mindestens einem Drallzug (26, 31) und die zweite Hülse (8, 11) an ihrer Innenseite mit mindestens einer Drallnut (33, 35) ausgestattet ist, und dass der zweite Drallkörperabschnitt (23) mit der zweiten Hülse (8, 11) über den Drallzug (26, 31) und die Drallnut (33, 35) in Eingriff steht.

6. Verstelleinrichtung nach Anspruch 4 und 5, **dadurch gekennzeichnet, dass** der Drallzug (25, 26, 30, 31) und die Drallnut (32, 33, 34, 35) einen schraubenlinienförmigen Verlauf oder einen linearen Verlauf aufweisen und dass der Drallzug (25, 30) im ersten Drallkörperabschnitt (22) des Drallkörpers (9, 12) von dem Drallzug (26, 31) im zweiten Drallkörperabschnitt (23) desselben Drallkörpers (9, 12) verschieden ist.

7. Verstellvorrichtung nach Anspruch 6, **dadurch gekennzeichnet, dass** der Drallzug (25, 30) in dem ersten Drallkörperabschnitt (22) und der Drallzug (26, 31) in dem zweiten Drallkörperabschnitt (23) desselben Drallkörpers (9, 12) gegenläufig sind.

8. Verstellvorrichtung nach Anspruch 6 oder 7, **dadurch gekennzeichnet, dass** der Drallzug (25, 30) in dem ersten Drallkörperabschnitt (22) und der Drallzug (26, 31) in dem zweiten Drallkörperabschnitt (23) desselben Drallkörpers (9, 12) eine unterschiedliche Steigung aufweisen.

9. Verstellvorrichtung nach einem der Ansprüche 4 bis 8, **dadurch gekennzeichnet, dass** der Drallzug (25, 26, 30, 31) und die Drallnut (32, 33, 34, 35) das Profil eines gleichschenkligen Trapezes aufweisen.

10. Verstellvorrichtung nach einem der Ansprüche 4 bis 8, **dadurch gekennzeichnet, dass** der Drallzug als Kugelgewinde ausgebildet ist und zusammen mit der Drallnut ein Kugelgewindetrieb bildet.

11. Verstellvorrichtung nach einem der vorhergehenden Ansprüche, **dadurch gekennzeichnet, dass** der Drallkörper (9, 12) zwischen dem ersten Drallkörperabschnitt (22) und dem zweiten Drallkörperabschnitt (23) einen dritten Drallkörperabschnitt (24) aufweist, und dass der Außendurchmesser des dritten Drallkörperabschnitts (24) kleiner ist als der Außendurchmesser des ersten Drallkörperabschnitts (22) und des zweiten Drallkörperabschnitts (23).

12. Verstellvorrichtung nach Anspruch 11, **dadurch gekennzeichnet, dass** der dritte Drallkörperabschnitt (24) entlang der geometrischen linearen Achse eine axiale Länge aufweist, die größer ist, als der maximale Verstellweg, den der Drallkörper (9, 12) angetrieben durch den Antrieb (2, 42, 52) entlang der geometrischen linearen Achse zurücklegt.

13. Verstellvorrichtung nach einem der vorhergehenden Ansprüche, **dadurch gekennzeichnet, dass** der Antrieb (2, 42, 52) einen Motor (5) und eine Spindelstange (6) umfasst, welche durch den Motor (5) um eine geometrische Antriebsachse angetrieben ist, dass der Drallkörper (9) der ersten Dreheinrichtung (3) in Wirkverbindung mit einem ersten Ende der Spindelstange (6) steht und von dieser angetrieben ist, dass der Drallkörper (12) der zweiten Dreheinrichtung (4) in Wirkverbindung mit einem dem ersten Ende entgegen gesetzten zweiten Ende der Spindelstange (6) steht und von dieser angetrieben ist.

14. Verstellvorrichtung nach Anspruch 13, **dadurch gekennzeichnet, dass** die Spindelstange (6) an ihren Enden mit einem Trapezgewinde (18, 19) ausgestattet ist, welches mit einem Innengewinde (20) des Drallkörpers (9, 12) in Eingriff steht.

15. Verstelleinrichtung nach Anspruch 13, **dadurch gekennzeichnet, dass** die Spindelstange (6) als Kugelgewindespindel ausgebildet ist und dass der Drallkörper (9, 12) mit einer Spindelmutter ausgestattet ist, welche zusammen mit der Kugelgewindespindel einen Kugelgewindetrieb bildet.

16. Verstellvorrichtung nach einem der Ansprüche 1 bis 12, **dadurch gekennzeichnet, dass** der Antrieb (42) einen Hydraulikzylinder (45) umfasst, dass der Drallkörper (9) der ersten Dreheinrichtung (3) mit einer Kolbenstange (46) des Hydraulikzylinders (45) verbunden ist und dass der Drallkörper (12) der zweiten Dreheinrichtung (4) mit einem Zylinderrohr (47) des Hydraulikzylinders (45) verbunden ist.

17. Verstellvorrichtung nach einem der Ansprüche 1 bis 12, **dadurch gekennzeichnet, dass** der Antrieb (52) einen Motor umfasst, der ein Zahnrad (56) zur Rotation antreibt, dass mit dem Zahnrad (56) eine erste Zahnstange (57) in Eingriff steht, die mit dem Drallkörper (9) der ersten Dreheinrichtung (3) verbunden ist, und dass mit dem Zahnrad (56) eine zweite Zahnstange (58) in Eingriff steht, die mit dem Drallkörper (12) der zweiten Dreheinrichtung (4) verbunden ist.

18. Verstellvorrichtung nach einem der vorhergehenden Ansprüche, **dadurch gekennzeichnet, dass** die Länge der ersten Hülse (7, 10) in axialer Richtung mit der Länge der zweiten Hülse (8, 11) in axialer Richtung im wesentlichen übereinstimmt, wobei die axiale Richtung auf die geometrische lineare Achse der ersten Dreheinrichtung (3) und/ oder der zweiten Dreheinrichtung (4) bezogen ist.

19. Verstellvorrichtung nach einem der vorhergehenden Ansprüche, **dadurch gekennzeichnet, dass** die erste Hülse (7, 10) mit einem ersten Befestigungsteil (14, 16) ausgestattet ist, das die erste Hülse (7, 10) mit einem feststehenden Bauteil drehfest und in axialer Richtung unverschieblich verbindet, und dass die zweite Hülse (8, 11) mit einem zweiten Befestigungsteil (15, 17) ausgestattet ist, das die zweite Hülse (8, 11) mit einem gegenüber dem feststehenden Bauteil zu bewegenden Bauteil (36) drehfest und in axialer Richtung unverschieblich verbindet.

20. Verstellvorrichtung nach Anspruch 19, **dadurch gekennzeichnet, dass** die erste Hülse (7, 10) einstückig mit dem ersten Befestigungsteil (15, 17) ausgeführt ist und/ oder dass die zweite Hülse (8, 11) einstückig mit dem zweiten Befestigungsteil (14, 16) ausgeführt ist.

21. Verstellvorrichtung nach Anspruch 19, **dadurch gekennzeichnet, dass** die erste Hülse formschlüssig mit dem ersten Befestigungsteil verbunden ist und/ oder dass die zweite Hülse formschlüssig mit dem zweiten Befestigungsteil verbunden ist.

22. Verstellvorrichtung nach Anspruch 19, **dadurch gekennzeichnet, dass** die erste Hülse kraftschlüssig mit dem ersten Befestigungsteil verbunden ist und/ oder dass die zweite Hülse kraftschlüssig mit dem zweiten Befestigungsteil verbunden ist.

23. Verstellvorrichtung nach einem der Ansprüche 19 bis 23, **dadurch gekennzeichnet, dass** sich das erste Befestigungsteil (14, 16) in axialer Richtung entlang der Außenseite der ersten Hülse (7, 10) erstreckt und die erste Hülse (7, 10) im wesentlichen entlang ihrer gesamten axialen Länge abstützt, und/ oder dass sich das zweite Befestigungsteil (15, 17) in axialer Richtung entlang der Außenseite der zweiten Hülse (8, 11) erstreckt und die zweite Hülse (8, 11) im wesentlichen entlang ihrer gesamten axialen Länge abstützt, wobei die axiale Richtung und die axiale Länge auf die geometrische lineare Achse der ersten Dreheinrichtung (3) und/ oder der zweiten Dreheinrichtung (4) bezogen sind.
